# EUROPEAN PATENT APPLICATION

(11) **EP 1 729 476 A1**
(43) Date of publication of application: **06.12.2006**
(21) Application number: 06076397.6
(22) Date of filing: 29.08.2003
(51) Int. Cl.: H04L 29/06

(54) **Method and apparatus for dynamically controlling a real-time multimedia data generation rate**

(30) Priority: 31.08.2002 KR 20020052289
(62) Divisional of application: 03255436.2
(71) Applicant: Samsung Electronics Co., Ltd., Suwon-si, Gyeonggi-Do (KR)
(72) Inventor: Jang, Kyung-hun, Suwon-city, Kyungki-do (KR); Hwang, Hyo-sun, Suwon-city, Kyungki-do (KR); Park, Jong-ae, 502-705 Jinsan Maeul Samsung, Yongin-city, Kyungki-do (KR)
(74) Representative: Greene, Simon Kenneth

(57) **Abstract**

A method and an apparatus for controlling a real-time multimedia data generation rate, according to a wireless channel state, in a wireless communications system includes two different embodiments of methods for controlling a real-time multimedia data generation rate, i.e., an open-source control method and a closed-source control method. In the open source method, the real-time multimedia data generation rate is controlled using a transmission buffer state of a wireless medium access control (MAC) module of a wireless terminal and other information, such as a packet loss rate. In the closed source method, the appropriate real-time multimedia data generation rate of an application program, which generates multimedia data in real time in a wireless terminal, is directly applied from an access point (AP) or determined through negotiation with a wireless AP.

## Description

The present invention relates to a method and an apparatus for controlling a real-time multimedia data generation rate according to a present state, i.e., condition, of a wireless channel.

Real-time protocol (RTP) and real-time transport control protocol (RTCP) are protocols used for transmitting real-time multimedia data and for monitoring a state of the real-time multimedia data being transmitted, respectively.

More specifically, RTP is an Internet protocol for transmitting data, such as audio or video data, which is generated in real time. RTP itself does not guarantee successful real-time data transmissions. Rather, RTP assists application programs to transmit and receive streaming data. RTP is generally implemented over user datagram protocol (UDP).

RTCP is a protocol that generally works in conjunction with RTP for maintaining quality-of-service (QoS). While RTP is only involved in data transmission, RTCP monitors data transmission and session information transmission. RTP nodes transmit RTCP packets to one another in order to analyze the network state and periodically notify one another of whether a network is congested.

Since RTP and RTCP are based on UDP, they are not able to provide functions such as guaranteed data quality or reliability of transmitted data, sequence reversal, or prevention of data retransmission. RTP and RTCP, however, can provide an information medium with synchronization necessary for real-time applications, and thus they have been adopted by almost every application program that is executed on the Internet using real-time information, such as a video-on-demand (VOD) service, an audio-on-demand (AOD) Internet Broadcasting, or a video conference service.

In a system capable of generating and transmitting multimedia data in real-time, a multimedia application program senses a network state using RTCP and controls a real-time multimedia data generation rate. Then, a receiving party receives the data with a minimal packet delay depending on the state of the network. More specifically, when the network is in a good state, i.e., operating under favorable conditions, the receiving party is supposed to be provided with high-quality services. However, when the network is in a poor state, i.e., operating under poor conditions, the receiving party is more likely to be provided with poor services. In order to make it possible to adaptively provide services to the receiving party depending on a current state of the network, RTCP is required to precisely identify the network state based on characteristics of the network.

Due to various techniques of transmitting data through wireless communications, however, it is no longer possible to effectively reflect a wireless channel state in adaptive data transmission by simply using the above-described method, which has been widely used in conventional wired networks. Even RTCP is not able to precisely determine the characteristics of a wireless network because information on a wired network and information on the wireless network are combined in the network state information processed by the RTCP layer. Therefore, it is necessary to more precisely determine the characteristics of a network and apply them to the RTCP.

In addition, in a wireless communications environment, packet loss and delays may occur depending on a network load and the wireless channel state. Since such packet losses and delays in multimedia services are generally due to both a poor state of a wired channel and a poor state of a wireless channel, it is almost impossible to determine whether a single monitored undesirable case is attributed to either a poor state of a wired network or a poor state of a wireless network.

In a case of a wireless channel, errors are generated when the wireless channel state abruptly changes. More specifically, a channel state of a wireless network changes in accordance with a passage of time rather than remaining constant. Therefore, even though conventional RTCP is considered appropriate for general monitoring of a network state, a new mechanism capable of dynamically controlling a data generation rate depending on a wireless channel state is necessary.

Furthermore, in a case of real-time multimedia services, a competition method or a polling method is preferred as a media access control (MAC) protocol. Before transmitting real-time multimedia service data, a polling cycle is determined based on a permissible data-transmission-delay time and a permissible data-loss rate. However, the polling method, in which the polling cycle is determined using such static variables associated with real-time multimedia services, is not able to effectively respond to a dynamically varying data generation rate, which may lead to an ineffective use or waste of resources.

The present invention provides a method for dynamically controlling a real-time multimedia data generation rate by sensing wireless channel characteristics and reflecting the wireless channel characteristics in the multimedia data generation rate. Accordingly, as compared to a conventional peer-to-peer data generation rate control method using a real-time transport control protocol (RTCP), the method for dynamically controlling a real-time multimedia data generation rate according to an embodiment of the present invention can more quickly adapt to any wireless channel state, thereby leading to a more efficient use of resources.

In particular, the present invention provides two different embodiments of methods of adjusting a data generation rate depending on a wireless channel state, i.e., an open source control method and a closed source control method. The open source control method is a method for unilaterally controlling a multimedia data generation rate in which a multimedia data generation rate varies using wireless channel information. The closed source control method is a method for controlling a multimedia data generation rate in which wireless resources are allotted to the application program that generates multimedia data in real time according to a real-time multimedia data generation rate.

According to an embodiment of the present invention, there is provided a method for controlling a multimedia data generation rate including generating multimedia data in real time according to a current multimedia data generation rate and transmitting the multimedia data, receiving transmission buffer, through which the multimedia data is transmitted, state information and a multimedia data loss rate during the transmission of the multimedia data, calculating a multimedia data generation rate based on the transmission buffer state information and the multimedia data loss rate, and generating multimedia data in real-time according to the calculated multimedia data generation rate and transmitting the generated multimedia data.

Preferably, calculating a multimedia data generation rate includes receiving the transmission buffer state information and the multimedia data loss rate, calculating a multimedia data generation rate based on the transmission buffer state information, by lowering a current multimedia data generation rate when the transmission buffer state information indicates that a large amount of standby multimedia data exists in the transmission buffer or the multimedia data loss rate is high or increasing the current multimedia data generation rate when the transmission buffer state information indicates that a small amount of standby multimedia data exists in the transmission buffer or the multimedia data loss rate is low, and transmitting the calculated multimedia data generation rate to a data generator.

According to another embodiment of the present invention, an open-source apparatus, which controls a multimedia data generation rate, includes a multimedia data generation and transmission unit for generating multimedia data in real-time according to a current multimedia data generation rate and for transmitting the multimedia data, a buffer state and packet loss rate information reception unit for receiving transmission buffer, through which the multimedia data is transmitted, state information and a multimedia data loss rate during the transmission of the multimedia data, and a multimedia data generation rate calculation unit for calculating a multimedia data generation rate corresponding to the transmission buffer state information and the multimedia data loss rate, wherein the multimedia data generation and transmission unit receives the calculated multimedia data generation rate from the multimedia data generation rate calculation unit, generates multimedia data in real time according to the received multimedia data generation rate, and transmits the multimedia data.

Preferably, the multimedia data generation rate calculation unit calculates the multimedia data generation rate, based on the transmission buffer state information, by lowering a current multimedia data generation rate when the transmission buffer state information indicates that a large amount of standby multimedia data exists in the transmission buffer or the multimedia data loss rate is high, or increasing the current multimedia data generation rate when the transmission buffer state information indicates that a small amount of standby multimedia data exists in the transmission buffer or the multimedia data loss rate is low.

According to still another embodiment of the present invention, a closed-source method for controlling a multimedia data generation rate includes receiving a current multimedia data generation rate, receiving a permissible polling cycle and packet length, calculating a multimedia data generation rate corresponding to the permissible polling cycle and packet length, and generating multimedia data in real time according to the calculated multimedia data generation rate and transmitting the multimedia data.

According to yet another embodiment of the present invention, a closed-source apparatus, which controls a multimedia data generation rate, includes a polling cycle and packet length information reception unit for receiving a permissible polling cycle and packet length information corresponding to a current multimedia data generation rate, a multimedia data generation rate calculation unit for calculating a multimedia data generation rate corresponding to the permissible polling cycle and packet length information, a multimedia data generation and transmission unit for generating multimedia data in real time according to the calculated multimedia data generation rate and for transmitting the multimedia data.

Preferably, the polling cycle and packet length information reception unit includes a WAL of a wireless terminal for issuing a request for a permissible polling cycle and packet length for transmission of multimedia data to a WAL of a wireless AP, and a WAL of the wireless AP for responding to the request issued by the WAL of the wireless terminal by calculating a permissible polling cycle and packet length, depending on a current network state, and for transmitting the permissible polling cycle and packet length to the WAL of the wireless terminal.

According to a further embodiment of the present invention, a closed-source method for controlling a multimedia data generation rate includes issuing a request for a permissible polling cycle and packet length information, which is necessary for wireless channel allocation, from a wireless adaptation layer (WAL) of a wireless terminal to a WAL of a wireless access point (AP), and responding to the request issued by the WAL of the wireless terminal by calculating a permissible polling cycle and packet length, depending on a current network state, and transmitting the permissible polling cycle and packet length from the WAL of the wireless AP to the WAL of the wireless terminal.

According to still a further embodiment of the present invention, a method for controlling a multimedia data generation rate through negotiations between a wireless terminal and a wireless AP includes receiving a current multimedia data generation rate, calculating a polling cycle for each session and a packet length for each polling cycle, corresponding to the current multimedia data generation rate, and issuing a request for a permissible polling cycle for each session and a permissible packet length for each permissible polling cycle to a WAL of the wireless AP, and receiving the permissible polling cycle for each session and the permissible packet length for each permissible polling cycle from the WAL of the wireless AP and adjusting the current multimedia data generation rate depending on the permissible polling cycle for each session and the permissible packet length for each permissible polling cycle.

According to still another embodiment of the present invention, a method for controlling a multimedia data generation rate through negotiations between a wireless terminal and a wireless access point (AP) includes receiving a request for a permissible polling cycle and packet length issued by a wireless adaptation layer (WAL) of the wireless terminal, and calculating a predetermined polling cycle for each session and a predetermined packet length for each predetermined polling cycle, which can be accommodated at a given moment in consideration of a current network state and transmitting calculation results to the WAL of the wireless terminal.

According to yet another embodiment of the present invention, there is provided a computer-readable recording medium on which a program enabling any of the above-described methods described above is recorded.

The above and other features and advantages of the present invention will become more apparent to those of ordinary skill in the art by describing in detail preferred embodiments thereof with reference to the attached drawings in which:
FIG. 1 is a diagram illustrating a structure of a network protocol stack in which a plurality of wireless terminals are connected to and communicate with a single wireless access point (AP);
FIG. 2 is a diagram illustrating an open source method for controlling a multimedia data generation rate according to a preferred embodiment of the present invention;
FIG. 3 is a flowchart for the open source method for controlling a multimedia data generation rate;
FIG. 4 is a block diagram of an open source apparatus for controlling a multimedia data generation rate according to a preferred embodiment of the present invention;
FIG. 5 is a block diagram illustrating a closed source method for controlling a multimedia data generation rate according to a preferred embodiment of the present invention;
FIG. 6 is a flowchart for the closed source method for controlling a multimedia data generation rate;
FIG. 7 is a diagram illustrating operations of and signal transmissions between a wireless adaptation layer (WAL) of a wireless access point (AP) and a WAL of a wireless terminal for negotiations on a polling cycle and the length of a multimedia data packet to be transmitted; and
FIG. 8 is a block diagram of a closed-source type apparatus for controlling a multimedia data generation rate according to a preferred embodiment of the present invention.

Korean Patent Application No. 2002-52289, filed on August 31, 2002, and entitled: "Method and Apparatus for Dynamically Controlling a Real-time Multimedia Data Generation Rate," is incorporated by reference herein in its entirety.

The present invention will now be described more fully hereinafter with reference to the accompanying drawings, in which preferred embodiments of the invention are shown. The invention may, however, be embodied in different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout.

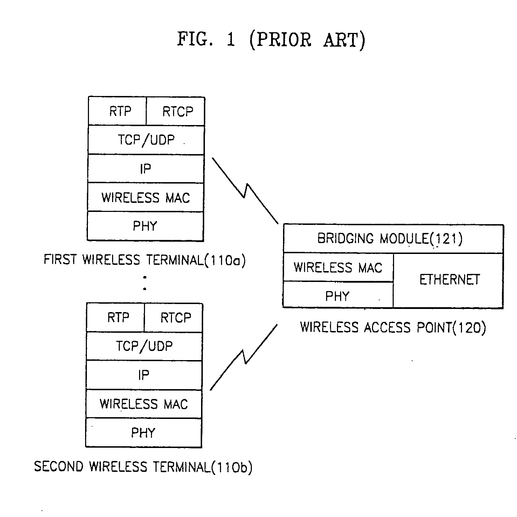

FIG. 1 is a diagram illustrating a structure of a network protocol stack in which a plurality of wireless terminals are connected to and communicate with a single wireless access point (AP).

As shown in FIG. 1, in a wireless communications network including a first and a second wireless terminal 110a and 110b and a wireless AP 120, real-time multimedia data from the first wireless terminal 110a is transmitted to an external network via a bridging module 121 in the wireless AP 120. When transmitting real-time multimedia data, the first and second wireless terminals 110a and 110b monitor the current transmission state of data packets and vary the data generation rate of an application program that generates multimedia data in real time accordingly. This monitoring method has been widely adopted in conventional wired communications systems. This monitoring method, however, may cause serious problems of data packet loss and delays over a network. Therefore, the present invention provides a method for adjusting a data generation rate based on a network state based on an assumption that packet loss and delays may be caused by an overloaded network.

The present invention provides two different embodiments of methods of adjusting a data generation rate, i.e., an open source method for controlling a multimedia data generation rate and a closed source method for controlling a multimedia data generation rate.

In the open source method for controlling a multimedia data generation rate, the real-time multimedia data generation rate is controlled using a transmission buffer state of a wireless medium access control (MAC) module of a wireless terminal and other information, such as a packet loss rate.

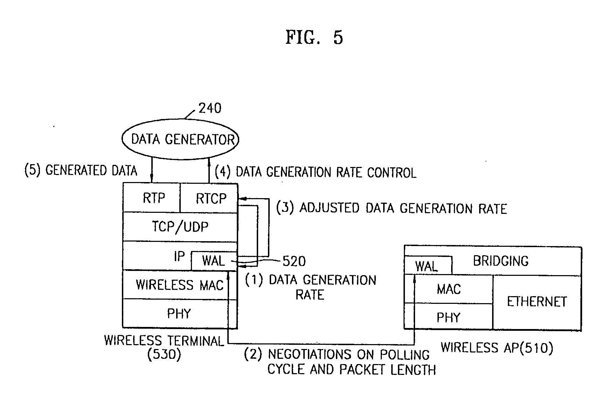

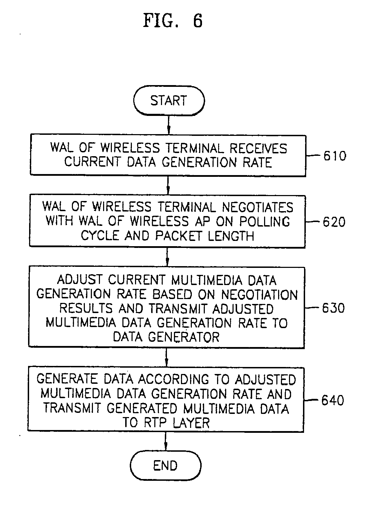

In the closed source method for controlling a multimedia data generation rate, the appropriate real-time multimedia data generation rate of an application program, which generates multimedia data in real time in a wireless terminal, is directly applied from an access point (AP) or determined through negotiation with a wireless AP. The closed source method will be described in greater detail with reference to FIGS. 5 and 6.

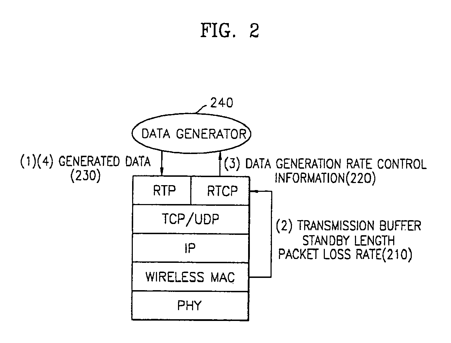

FIG. 2 is a diagram illustrating an open source method for controlling a multimedia data generation rate according to a preferred embodiment of the present invention.

Conventionally, multimedia data is transmitted using real-time protocol (RTP) and the multimedia data generation rate is controlled by RTCP, which monitors a state of a network between a receiving party, i.e., a wireless AP, and a sending party, i.e., a wireless terminal. However, in the open source method for controlling a multimedia data generation rate of the present invention, information 210 is transmitted to the RTCP layer from the MAC layer of a wireless terminal. The information 210 includes a multimedia data loss rate (packet loss rate) and a state of a transmission buffer used for transmitting multimedia data (transmission buffer standby rate).

If a large amount of standby multimedia data builds up in the transmission buffer or the multimedia data loss rate is high, the RTCP layer lowers the multimedia data generation rate. Alternately, if a small amount of standby multimedia data exists in the transmission buffer and the multimedia data loss rate is low, the RTCP layer increases the multimedia data generation rate. By considering this information, the multimedia data generation rate is controlled in real time.

Thereafter, real-time multimedia data generation rate information 220 is transmitted to a data generator 240 that generates multimedia data 230 in real time. The data generator 240 generates real-time multimedia data 230 and transmits the generated real-time multimedia data 230 via RTP.

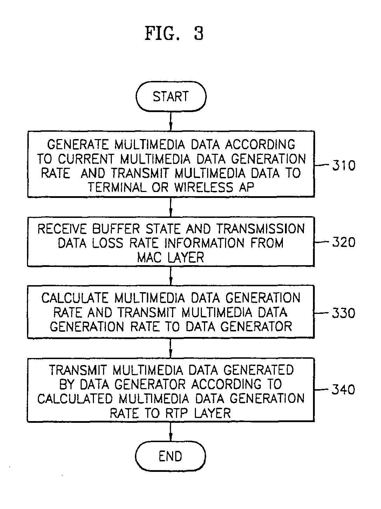

FIG. 3 is a flowchart for the open source method for controlling a multimedia data generation rate as shown in FIG. 2. Referring to FIG. 3, in step 310, a data generator generates multimedia data according to a current multimedia data generation rate and transmits the multimedia data to a wireless terminal or a wireless AP via RTP.

Thereafter, in step 320, an RTCP layer receives multimedia data loss rate information and the state of a transmission buffer that receives multimedia data transmitted from the MAC layer. As described above, the multimedia data generated in step 310 is transmitted to the wireless terminal via the transmission buffer. When the network is in a poor state, the amount of standby multimedia data waiting to be transmitted increases. Alternately, when the network is in a good state, multimedia data is transmitted as soon as it is generated, thereby decreasing the amount of standby multimedia data. Thus, the transmission buffer state indicates an amount of such standby multimedia data waiting to be transmitted in the transmission buffer. In addition, when the network is in a poor state, a significant amount of data loss may occur during the transmission of the multimedia data. The RTCP layer receives this multimedia data loss rate information.

In step 330, the RTCP layer calculates a multimedia data generation rate based on the transmission buffer state and the multimedia data loss rate information and transmits the calculated multimedia data generation rate to the data generator. More specifically, when a large amount of standby multimedia data exists in the transmission buffer or a multimedia data loss rate is high, the RTCP layer lowers the current multimedia data generation rate. Alternately, when a small amount of standby multimedia data exists in the transmission buffer or the multimedia data loss rate is low, the RTCP layer increases the current multimedia data generation rate. By considering this information, the multimedia data generation rate can be controlled in real time.

Subsequently, in step 340, the data generator generates multimedia data according to the received multimedia data generation rate and transmits the multimedia data to the RTP layer.

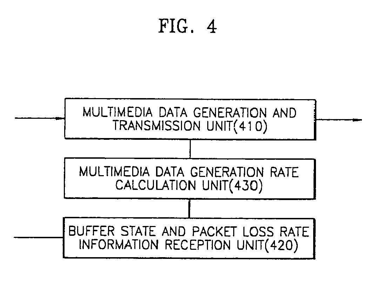

FIG. 4 is a block diagram of an open source apparatus for controlling a multimedia data generation rate according to a preferred embodiment of the present invention. Referring to FIG. 4, the open source apparatus includes a multimedia data generation and transmission unit 410, a buffer state and packet loss rate information reception unit 420, and a multimedia data generation rate calculation unit 430.

In operation, the multimedia data generation and transmission unit 410 generates multimedia data in real time according to current multimedia data generation rate information and transmits the multimedia data to a wireless terminal or a wireless AP via RTP.

The buffer state and packet loss rate information reception unit 420 receives state information of a transmission buffer that receives the multimedia data being transmitted and multimedia data loss rate information during the transmission of the multimedia data from a MAC layer via RTCP.

Specifically, when a network is in a poor state, i.e., operating under poor network conditions, the amount of standby multimedia data waiting to be transmitted increases. Alternately, when the network is in a good state, i.e., operating under good network conditions, multimedia data is transmitted as soon as it is generated, thereby decreasing an amount of standby multimedia data. Accordingly, the transmission buffer state indicates the amount of such standby multimedia data waiting to be transmitted in the transmission buffer. In addition, under poor network conditions, a significant amount of data loss may occur during the transmission of the multimedia data. The RTCP layer receives this multimedia data loss rate information.

The multimedia data generation rate calculation unit 430 calculates a multimedia data generation rate corresponding to the transmission buffer state information and the multimedia data loss rate information of the multimedia data being transmitted. Specifically, when a large amount of standby multimedia data exists in the transmission buffer or a multimedia data loss rate is high, the multimedia data generation rate calculation unit 430 lowers the current multimedia data generation rate. Alternately, when a small amount of standby multimedia data exists in the transmission buffer or the multimedia data loss rate is low, the multimedia data generation rate calculation unit 430 increases the current multimedia data generation rate. By considering this information, the multimedia data generation rate can be controlled in real time.

In addition, the multimedia data generation and transmission unit 410 receives the multimedia data generation rate from the multimedia data generation rate calculation unit 430, and generates and transmits multimedia data in real time.

FIG. 5 is a diagram illustrating a closed source method for controlling a multimedia data generation rate. More specifically, FIG. 5 shows data transmission among a wireless terminal 530, a wireless AP 510, and a protocol stack.

As opposed to the open source method for controlling a multimedia data generation rate, the closed source method for controlling a multimedia data generation rate dynamically creates reservations of wireless resources when a multimedia data generation rate varies. A multimedia application program that is able to generate multimedia data in real time determines, with the help of a wireless adaptation layer (WAL) 520 of a wireless terminal, whether a wireless AP 510 can allot resources thereto, according to a polling cycle corresponding to a current multimedia data generation rate and a multimedia data packet length.

Polling is a process that provides a wireless terminal an opportunity to transmit multimedia data to an AP. More specifically, whenever a polling signal is received, the wireless terminal is allowed to transmit multimedia data to the AP. When the multimedia data generation rate varies, the WAL 520 of the wireless terminal negotiates with the wireless AP 510 on the polling cycle and the multimedia data packet length.

FIG. 6 is a flowchart for the closed source method for controlling a multimedia data generation rate as shown in FIG. 5. Referring to FIG. 6, in step 610, a WAL of a wireless terminal receives a current multimedia data generation rate from the RTCP layer of the wireless terminal.

In step 620, the WAL of the wireless terminal negotiates with the WAL of the wireless AP on a polling cycle and a multimedia data packet length for allotting a wireless channel. More specifically, the WAL of the wireless terminal calculates the polling cycle and the multimedia data packet length corresponding to the current multimedia data generation rate and issues a request for a permissible polling cycle corresponding to a current channel state and packet length information of multimedia data currently being transmitted to the WAL of the wireless AP. Then the WAL of the wireless AP transmits the permissible polling cycle and the multimedia data packet length information to the WAL of the wireless terminal.

Thereafter, in step 630, the current multimedia data generation rate is adjusted based on the polling cycle and the multimedia data packet length information transmitted from the WAL of the wireless terminal. Then, the adjusted multimedia data generation rate is transmitted to a data generator.

Subsequently, in step 640, the data generator generates multimedia data according to the received multimedia data generation rate and transmits the generated multimedia data to the RTP layer.

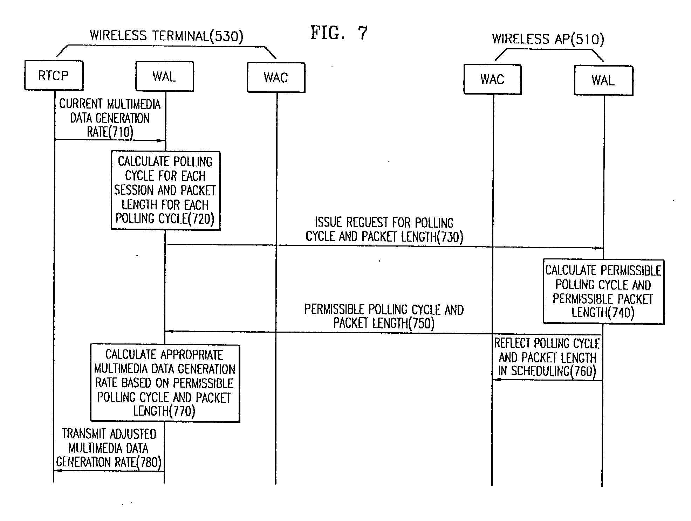

FIG. 7 is a diagram illustrating processes performed and signals transmitted between the WAL of a wireless terminal and the WAL of a wireless AP during negotiations over a polling cycle and the packet length of multimedia data to be transmitted.

A wireless terminal 530 generates multimedia data based on a predetermined multimedia data generation rate. In 710, the predetermined multimedia data generation rate is transmitted from the RTCP layer of the wireless terminal to the WAL of the wireless terminal. Then, in 720, in order to maintain a desired multimedia data generation rate, the WAL calculates a polling cycle for each session and a packet length for each calculated polling cycle. The packet length and the polling cycle are then transmitted to the wireless AP using the predetermined multimedia data generation rate. Finally, the wireless terminal 530 transmits the multimedia data to the wireless AP 510 on a packet-by-packet basis according to the polling cycle, where each packet length is the same as the packet length calculated by the WAL.

Next, in 730, the WAL of the wireless terminal 530 issues to the WAL of the wireless AP 510 a request for a predetermined polling cycle for each session and a packet length for each predetermined polling cycle, which can be permitted by the WAL of the wireless AP in consideration of the current network state.

In response to the request issued by the WAL of the wireless terminal 530, in 740, the WAL of the wireless AP 510 calculates the permissible polling cycle for each session and the packet length for each permissible polling cycle by referring to the current network state and its own resources. More specifically, if the current network state is poor, the WAL of the wireless AP 510 lengthens the polling cycle and shortens the packet length to reduce the multimedia data transmission rate. Alternately, if the current network state is good, the WAL of the wireless AP 510 shortens the polling cycle and lengthens the packet length to increase the multimedia data generation rate.

Thereafter, in 750, the calculated polling cycle and packet length are transmitted to the WAL of the wireless terminal 530 and then to the MAC layer, so that, in 760, they can be reflected in scheduling. In 770, the wireless terminal 530 calculates a multimedia data generation rate based on the polling cycle and packet length calculated by the wireless AP 510, and, in 780, transmits the calculated multimedia data generation rate to the RTCP layer. By considering this information, the wireless terminal 530 can dynamically control a multimedia data generation rate in real-time depending on a wireless channel state, a network state, and a resource allocation of a wireless AP 510.

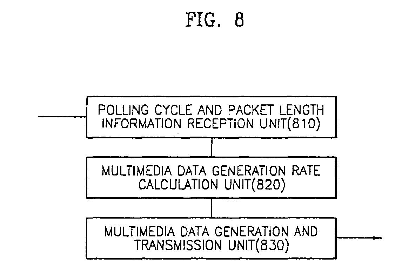

FIG. 8 is a block diagram of a closed source apparatus for controlling a multimedia data generation rate according to a preferred embodiment of the present invention. The closed source apparatus includes a polling cycle and packet length information reception unit 810, a multimedia data generation rate calculation unit 820, and a multimedia data generation and transmission unit 830.

The polling cycle and packet length information reception unit 810 receives permissible polling cycle and packet length information corresponding to a current multimedia data generation rate. A WAL of a wireless terminal issues a request for a polling cycle and a packet length appropriate for transmission of multimedia (at a given moment) to a WAL of a wireless AP. In response to the request issued by the WAL of the wireless terminal, the WAL of the wireless AP transmits a permissible polling cycle and packet length to the WAL of the wireless terminal, which are obtained in consideration of the current network state.

The multimedia data generation rate calculation unit 820 calculates a multimedia data generation rate corresponding to the permissible polling cycle and packet length.

The multimedia data generation and transmission unit 830 generates multimedia data according to the calculated multimedia data generation rate and transmits the generated multimedia data.

The embodiments of the present invention set forth herein may be written into programs that can be executed in a common digital computer using a computer-readable recording medium. The types of computer-readable recording medium include a magnetic storage medium, such as ROM, a floppy disk, or a hard disk; an optical recording medium, such as CD-ROM or a DVD; and a carrier wave, such as data transmission through the Internet.

As described above, according to the present invention, a multimedia data generation rate is controlled depending on a current wireless channel state. More specifically, the open source method for controlling a multimedia data generation rate according to the present invention controls a multimedia data generation rate depending on a variable channel state; the closed source method for controlling a multimedia data generation rate controls a multimedia data generation rate using an application program of a wireless terminal that controls the multimedia data generation rate depending on a channel state and generates multimedia data in real-time based on results of controlling the multimedia data generation rate. Therefore, the present invention is able to provide real-time multimedia services more quickly and more responsively to the variable wireless channel state, and is able to more efficiently exploit resources, as compared to conventional peer-to-peer-type multimedia data generation rate control methods using RTCP.

Preferred embodiments of the present invention have been disclosed herein and, although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

## Claims

1. A closed-source method for controlling a multimedia data generation rate, comprising:
(a) receiving a current multimedia data generation rate;
(b) receiving a permissible polling cycle and packet length;
(c) calculating a multimedia data generation rate corresponding to the permissible polling cycle and packet length; and
(d) generating multimedia data in real time according to the calculated multimedia data generation rate and transmitting the multimedia data.

2. The method as claimed in claim 1, wherein step (b) comprises:
(b1) issuing a request for a polling cycle and packet length appropriate for the transmission of multimedia data from a wireless adaptation layer (WAL) of a wireless terminal to a WAL of a wireless access point (AP); and
(b2) calculating a permissible polling cycle and packet length in consideration of a current network state and transmitting the permissible polling cycle and packet length from the WAL of the wireless AP to the WAL of the wireless terminal.

3. The method as claimed in claim 1, wherein step (b) comprises:
(b1) transmitting predetermined multimedia data generation rate information from a real-time transport control protocol (RTCP) layer of a wireless terminal to a wireless adaptation layer (WAL) of the wireless terminal and calculating a polling cycle for each session and a packet length for each calculated polling cycle based on the predetermined multimedia data generation rate information;
(b2) transmitting the calculated polling cycle for each session and packet length for each calculated polling cycle to a WAL of a wireless AP and issuing from the WAL of the wireless terminal to the WAL of the wireless AP a request for a permissible polling cycle for each session and a packet length for each predetermined polling cycle, which can be permitted by the WAL of the wireless AP; and
(b3) calculating the permissible polling cycle and the permissible packet length in response to the request issued by the WAL of the wireless terminal, and transmitting calculation results from the WAL of the wireless AP to the WAL of the wireless terminal.

4. The method as claimed in claim 1, 2 or 3, wherein step (c) comprises:
(c1) receiving in a WAL of a wireless terminal the permissible polling cycle and the permissible packet length, and calculating a multimedia data generation rate corresponding to the permissible polling cycle and the permissible packet length;
(c2) transmitting the calculated multimedia data generation rate from the WAL of the wireless terminal to an RTCP layer; and
(c3) replacing the current multimedia data generation rate with the calculated multimedia data generation rate and transmitting the adjusted multimedia data generation rate to a data generator.

5. The method as claimed in claim 4, wherein in (c2), when a network is in a poor state, a polling cycle is lengthened and a packet length for each polling cycle is reduced to decrease multimedia data transmission speed, and when the network is in a good state, the polling cycle is shortened and the packet length for each polling cycle is increased to enhance multimedia data transmission speed.

6. A closed-source apparatus, which controls a multimedia data generation rate, comprising:
(a) a polling cycle and packet length information reception unit for receiving a permissible polling cycle and packet length information corresponding to a current multimedia data generation rate;
(b) a multimedia data generation rate calculation unit for calculating a multimedia data generation rate corresponding to the permissible polling cycle and packet length information;
(c) a multimedia data generation and transmission unit for generating multimedia data in real time according to the calculated multimedia data generation rate and for transmitting the multimedia data.

7. The apparatus as claimed in claim 6, wherein the polling cycle and packet length information reception unit comprises:
a WAL of a wireless terminal for issuing a request for a permissible polling cycle and packet length for transmission of multimedia data to a WAL of a wireless AP; and
a WAL of the wireless AP for responding to the request issued by the WAL of the wireless terminal by calculating a permissible polling cycle and packet length, depending on a current network state, and for transmitting the permissible polling cycle and packet length to the WAL of the wireless terminal.

8. A closed-source method for controlling a multimedia data generation rate, comprising:
(a) issuing a request for a permissible polling cycle and packet length information, which is necessary for wireless channel allocation, from a wireless adaptation layer (WAL) of a wireless terminal to a WAL of a wireless access point (AP); and
(b) responding to the request issued by the WAL of the wireless terminal by calculating a permissible polling cycle and packet length, depending on a current network state, and transmitting the permissible polling cycle and packet length from the WAL of the wireless AP to the WAL of the wireless terminal.

9. A method for controlling a multimedia data generation rate through negotiations between a wireless terminal and a wireless access point (AP), comprising:
(a) receiving a current multimedia data generation rate;
(b) calculating a polling cycle for each session and a packet length for each polling cycle, corresponding to the current multimedia data generation rate, and issuing a request for a permissible polling cycle for each session and a permissible packet length for each permissible polling cycle to a WAL of the wireless AP; and
(c) receiving the permissible polling cycle for each session and the permissible packet length for each permissible polling cycle from the WAL of the wireless AP and adjusting the current multimedia data generation rate depending on the permissible polling cycle for each session and the permissible packet length for each permissible polling cycle.

10. A method for controlling a multimedia data generation rate through negotiations between a wireless terminal and a wireless access point (AP), comprising:
(a) receiving a request for a permissible polling cycle and packet length issued by a wireless adaptation layer (WAL) of the wireless terminal; and
(b) calculating a predetermined polling cycle for each session and a predetermined packet length for each predetermined polling cycle, which can be accommodated at a given moment in consideration of a current network state and transmitting calculation results to the WAL of the wireless terminal.

11. A computer-readable recording medium on which a program encoding the method of any of claims 1 to 4 or 8 to 10 is recorded.
